Europäisches Patentamt

European Patent Office

Office européen des brevets

(11) Numéro de publication: **0 165 089**
**A1**

## (12) DEMANDE DE BREVET EUROPEEN

(21) Numéro de dépôt: 85400769.7

(22) Date de dépôt: 18.04.85

(51) Int. Cl.⁴: **C 09 D 5/00**
C 08 J 9/00, C 08 L 27/06

(30) Priorité: 27.04.84 FR 8406631

(43) Date de publication de la demande:
18.12.85 Bulletin 85/51

(84) Etats contractants désignés:
AT BE CH DE FR GB IT LI NL SE

(71) Demandeur: COFIDEP S.A.
Tour Aurore Place des Reflets
F-92080 Paris La Défense 2(FR)

(72) Inventeur: Saldinari, André
4 Avenue de l'Eglise
F-91000 Evry(FR)

(74) Mandataire: Dubost, Thierry Pierre
SOCIETE CHIMIQUE DES CHARBONNAGES Service
Propriété Industrielle B.P. 57
F-62670 Mazingarbe(FR)

(54) Composition et procédé de prélaquage des métaux.

(57) Composition pour prélaquage des métaux comprenant au moins un polymère de chlorure de vinyle en poudre, au moins un plastifiant dudit polymère, au moins un agent capable de stabiliser ladite composition vis-à-vis de la chaleur et du rayonnement ultra-violet et au moins un agent gonflant.

L'agent gonflant est un solide et la composition comprend en outre au moins un diluant capable d'ajuster la viscosité à 25°C de la composition, ladite viscosité étant mesurée au moyen d'un viscosimètre Brookfield RVT rotor n°5 à 20 tours/min., dans une gamme comprise entre 0,5 et 10 Pa.s.

Application à l'obtention d'une pièce en tôle métallique revêtue d'une couche de prélaquage expansée.

EP 0 165 089 A1

Croydon Printing Company Ltd

La présente invention concerne une composition et un procédé de prélaquage des métaux par application d'un revêtement à base de polychlorure de vinyle.

On connait déjà par le brevet français n° 1.168.781 un procédé de fabrication d'un matériau cellulaire directement sur un support (tissu, cuir, métal), caractérisé par l'incorporation comme agent gonflant, dans la composition de base, d'un mélange liquide de produits volatils. Selon ce procédé l'obtention des cellules résulte de l'action de la chaleur sur le film mince appliqué sur le support par un moyen quelconque tel que l'enduction, la pulvérisation pneumatique, etc. La dimension des cellules est d'autant plus faible que la tension de vapeur du mélange liquide est plus forte. L'action de la pression à chaud, par exemple par laminage, permet de passer des cellules ouvertes communicantes aux cellules indépendantes fermées. A titre d'exemple ce procédé comporte l'application, à l'état pâteux, d'une composition comprenant, pour 100 parties d'un (co)polymère de chlorure de vinyle, de 50 à 100 parties de plastifiant, de 10 à 25 parties de pigment colorant, de 1 à 3 parties de stabilisant et de 5 à 50 parties d'un liquide gonflant volatil tel que xylène, diisobutylcétone, etc., ladite application étant suivie d'un traitement sous pression à une température ne dépassant pas 160°C.

Le procédé connu comporte deux inconvénients auxquels il convient d'apporter remède. D'une part la mise en oeuvre de compositions pâteuses, c'est-à-dire de viscosité de l'ordre de 100 Pa.s, constitue une grande difficulté technique pour le prélaquage de revêtements alvéolaires sur des métaux. D'autre part l'utilisation en quantité importante de liquides volatils dans la composition de base pose un problème de respect de l'environnement en raison du caractère dangereux des liquides préconisés.

La présente invention vise donc à définir des compositions de prélaquage des métaux aptes à résoudre les problèmes posés par le procédé connu, ainsi qu'un procédé d'application desdites compositions.

Pour atteindre le but précité la demanderesse propose comme premier objet de la présente invention une composition pour prélaquage des métaux comprenant au moins un polymère de chlorure de vinyle en poudre, au moins un plastifiant dudit polymère , au moins un agent capable de stabiliser ladite composition vis-à-vis de la chaleur et du rayonnement ultraviolet et au moins un agent gonflant, caractérisée en ce que ledit agent gonflant est un solide et en ce qu'elle comprend en outre au moins un diluant capable d'ajuster la viscosité à 25°C de la composition, ladite viscosité étant mesurée au moyen d'un viscosimètre Brookfield RVT rotor n° 5 à 20 tours/min., dans une gamme comprise entre 0,5 et 10 Pa.s. Par polymère de chlorure de vinyle on entend non seulement les homopolymères du chlorure de vinyle mais aussi les copolymères de chlorure de vinyle avec au moins un comonomère tel que, notamment, l'acétate de vinyle et le chlorure de vinylidène. Par plastifiant du polymère de chlorure de vinyle on entend notamment des phtalates d'alcools ayant de 6 à 12 atomes de carbone, linéaires ou ramifiés, tels que les phtalates de 2-éthyl hexyle, d'isodécyle, etc. Les agents capables de stabiliser la composition vis-à-vis de la chaleur et du rayonnement ultraviolet sont également des composés bien connus tels que notamment des dérivés organiques d'étain, de plomb, de baryum, de cadmium, de zinc, etc.

Les agents gonflants solides utilisables dans les compositions selon l'invention sont notamment l'azodicarbonamide,l'azo-bis-isobutyronitrile et leurs dérivés. Enfin les diluants utilisables dans les compositions selon l'invention sont des solvants lourds et, de préférence, inodores tels que des alkylbenzènes dont la chaîne aliphatique possède au moins 8 atomes de carbone. Dans la mesure où, cependant, on accepterait une odeur résiduelle après cuisson et expansion, on peut également utiliser comme diluants des hydrocarbures aliphatiques saturés, des coupes pétrolières de température d'ébullition comprise entre 150° et 300°C, du white-spirit, etc.

Dans la plupart des applications, une composition préférée selon l'invention comprendra de 50 à 75 % en poids de polymère de chlorure de vinyle en poudre, de 25 à 48 % en poids de plastifiant, de 0,5 à 2 % en poids d'agent gonflant, de 0,5 à 2 % en poids d'agent stabilisant et de 0,1 à 5 % en poids de diluant. Dans la plupart des applications des compositions selon l'invention, il est également souhaitable que la granulométrie moyenne de la poudre de polymère de chlorure de vinyle soit comprise entre 8 et 30 $\mu$m.

La composition selon l'invention pourra, sans perdre son aptitude à l'application de revêtements alvéolaires sur métaux, comprendre en outre jusqu'à 15 % en poids d'au moins une charge minérale et/ou jusqu'à 2 % en poids d'au moins un stabilisateur de viscosité. Par charge minérale dans le cadre de la présente invention on entend notamment des charges minérales à faible surface spécifique telles que le carbonate de calcium, le talc, la silice, le kaolin calciné, les oxydes de zinc, d'aluminium, d'antimoine, etc. Par stabilisateur de viscosité on entend notamment des dérivés d'alcools gras tels que des esters de polyols. La composition selon l'invention peut également comprendre en outre jusqu'à 3 % en poids d'au moins un régularisateur d'expansion et/ou (lorsqu'une coloration est désirée) au moins un pigment minéral ou organique. Par régularisateur d'expansion on entend notamment des agents tensio-actifs non-ioniques tels que par exemple des dérivés de polyols.

La demanderesse propose comme second objet de la présente invention un procédé de prélaquage des métaux comprenant successivement les étapes de traitement de surface du métal, d'enduction et réticulation de primaire, caractérisé en ce qu'il comprend en outre une étape d'enduction et de cuisson d'une composition telle que décrite précédemment. Dans la plupart des cas, la mise en oeuvre du procédé selon l'invention sera effectuée selon les conditions détaillées ci-après :

- la cuisson de la composition de prélaquage sera effectuée à une température comprise entre 175° et 215°C et/ou pendant une durée comprise entre 10 et 120 secondes.

- l'enduction de la composition de prélaquage est effectuée à une vitesse comprise entre 5 et 60 mètres par minute et/ou à raison d'au moins 400 grammes de ladite composition par mètre carré de métal.

Par traitement de surface du métal on entend, dans le cadre de la présente invention, l'une ou l'autre ou une combinaison des opérations suivantes, en elles-mêmes bien connues de l'homme de l'art : dégraissage, brossage, rinçage, phosphatation, chromatation, etc.

Par primaire on entend une couche d'adhérence, également connue de l'homme de l'art, généralement à base de résines époxydiques ou phénoliques. Un exemple de primaire convenant particulièrement au procédé selon l'invention comprend au moins une résine acrylique thermoplastique, une résine phénolique éventuellement étherifiée, une résine vinylique et éventuellement une résine époxy de haut poids moléculaire. Le primaire peut en outre comporter au moins un pigment opacifiant, tel que le dioxyde de titane, et/ou un pigment inhibiteur de corrosion tel que chromate et phosphate de zinc. Comme il est déjà connu, l'enduction du primaire peut être effectué notamment au moyen d'une vernisseuse à rouleaux fonctionnant en sens direct ou en sens inverse.

Dans la plupart des cas, l'enduction de la composition de prélaquage est effectué, après refroidissement de la tôle, au moyen d'une vernisseuse à rouleaux fonctionnant en sens direct ou en sens inverse. La cuisson de la composition de prélaquage, provoquant la gélification des particules de polymère de chlorure de vinyle par le plastifiant puis leur fusion, peut être effectuée selon les deux variantes suivantes. Dans la première variante, la cuisson a lieu à une température telle qu'il y a seulement fusion des particules de polymère de chlorure de vinyle et formation d'un film continu compact. Dans la seconde variante, la cuisson a lieu à une température telle qu'il y ait à la fois fusion des particules de polychlorure de vinyle et décomposition de l'agent gonflant provoquant l'expansion de la composition de prélaquage pour former un revêtement alvéolaire. Cette double possibilité pour la cuisson permet de réaliser la mise en oeuvre de la composition selon l'invention soit instantanément soit après une période de stockage des pièces métalliques prélaquées, selon les besoins. L'application de la composition de prélaquage peut aussi être effectuée par d'autres procédés conventionnels tels que pistolet pneumatique, pistolet sans air, enduction à la râcle.

Le cas échéant le procédé selon l'invention pourra comporter, après enduction et avant expansion de la composition de prélaquage, une étape d'enduction d'une composition de plastisol à base de polychlorure de vinyle ; dans ce cas l'expansion de la composition de prélaquage et la cuisson de la composition de plastisol peuvent être effectuées simultanément. Facultativement le procédé selon l'invention pourra comporter, après la cuisson de la composition de prélaquage, une étape de gravure et/ou embossage du revêtement alvéolaire pour obtenir l'aspect de surface désiré. En dernière étape, la pièce métallique est refroidie par des jets d'air comprimé ou d'eau. Le cas échéant, la tôle métallique plate prélaquée passe ensuite entre des galets formeurs pour obtenir des angles, des tubes arrondis, etc.

Un troisième objet de la présente invention est constitué par une pièce en tole métallique revêtue d'au moins une couche de primaire d'adhérence, elle-même revêtue d'au moins une couche de prélaquage, caractérisée en ce que la couche de prélaquage est une couche expansée obtenue à partir d'une composition telle que décrite précédemment. La pièce en tole selon l'invention peut être constituée notamment en un métal choisi parmi l'acier, l'acier galvanisé, l'aluminium et leurs alliages ; elle peut avoir une épaisseur quelconque, souvent comprise entre 0,2 et 2 mm. Les pièces en tôles prélaquées selon l'invention trouvent des usages variés, notamment dans l'industrie du bâtiment, en raison de leurs qualités décoratives et d'isolation phonique et thermique : elles peuvent par exemple être utilisées dans des cabines téléphoniques, salles de musique, intérieurs de caravanes, etc...

EXEMPLE 1

On prépare une composition de prélaquage en mélangeant (toutes les proportions sont exprimées en poids) :

- 55,2 % d'une poudre de polychlorure de vinyle de granulométrie moyenne 15 m, commercialisée par la société ATOCHEM sous le nom LUCOVYL PB 1202.
- 30,4 % d'un phtalate de linévol commercialisé par la société SHELL sous l'appellation DL 711 P.

- 0,7 % d'un carboxylate d'étain commercialisé sous le nom IRGASTAB T 633.

- 0,6 % d'un dérivé de cadmium et zinc commercialisé par la société HAAGEN CHEMIE sous le nom HAROCHEM KZ 15 L.

- 1,1 % d'azodicarbonamide.

- 0,7 % d'un stabilisateur de viscosité commercialisé par la société HENKEL sous l'appellation DEPLASTOL.

- 5,6 % d'un carbonate de calcium commercialisé par la société OMYA sous l'appellation DURCAL 5.

- 2 % d'un pigment.

- 1,6 % d'un régularisateur d'expansion commercialisé par la société C.F.P.I. sous le nom GALORYL PL 386.

- 2,1 % d'un diluant commercialisé par la société SHELL sous le nom SHELLFLEX 80.

La viscosité de la composition ainsi obtenue, mesurée au moyen d'un viscosimètre Brookfield RVT rotor n°5 à 20 tours/min, est égale à 1,5 Pa.s.

EXEMPLE 2

On procède au prélaquage d'un feuillard d'acier d'épaisseur 1 mm en commençant par un traitement de surface du métal selon les méthodes bien connues de dégraissage, brossage, rinçage, phosphatation et chromatation. On fait passer le feuillard ainsi traité par un poste d'enduction de primaire comprenant une vernisseuse à rouleaux de façon à obtenir une couche de primaire d'adhérence d'épaisseur 6 μm environ. Le primaire utilisé est une composition comprenant 48 % en poids de résine acrylique, 9,5 % en poids de résine phénolique, 3 % en poids de résine vinylique, 13 % en poids d'alcool isopropylique, 21,5 % en poids de diacétone alcool, 3 % en poids de dioxyde de titane et 2 % en poids de chromate de strontium. Après séchage et réticulation du primaire à 220°C, on refroidit la tôle puis on la fait passer par un poste d'enduction de la composition de prélaquage. La composition décrite à l'exemple 1 est aussi enduite sur le métal à raison de 650 grammes environ par mètre carré et à une vitesse de 30 mètres par minute. Après enduction de ladite composition, on fait passer la tôle prélaquée par un poste de cuisson où la température de la tôle atteint 204°C et dans lequel la chaleur provoque à la fois la fusion des particules de polychlorure de vinyle et l'expansion de la composition de prélaquage pour former un revêtement alvéolaire. Après cette étape de cuisson, on refroidit la tôle par des jets d'air comprimé. La tôle ainsi obtenue est prête à être enroulée en bobine ou bien encore transformée pour lui donner les formes les plus variées en fonction des usages prévus.

REVENDICATIONS

1. Composition pour prélaquage des métaux comprenant au moins un polymère de chlorure de vinyle en poudre, au moins un plastifiant dudit polymère, au moins un agent capable de stabiliser ladite composition vis-à-vis de la chaleur et du rayonnement ultra-violet et au moins un agent gonflant caractérisée en ce que ledit agent gonflant est un solide et en ce qu'elle comprend en outre au moins un diluant capable d'ajuster la viscosité à 25°C de la composition, ladite viscosité étant mesurée au moyen d'un viscosimètre Brookfield RVT rotor n°5 à 20 tours/min., dans une gamme comprise entre 0,5 et 10 Pa.s.

2. Composition selon la revendication 1, caractérisée en ce qu'elle comprend de 50 à 75 % en poids de polymère de chlorure de vinyle en poudre, de 25 à 48 % en poids de plastifiant, de 0,5 à 2 % en poids d'agent gonflant, de 0,5 à 2 % en poids d'agent stabilisant et de 0,1 à 5 % en poids de diluant.

3. Composition selon l'une des revendications 1 et 2, caractérisée en ce qu'elle comprend en outre jusqu'à 15 % en poids d'au moins une charge minérale.

4. Composition selon l'une des revendications 1 à 3, caractérisée en ce qu'elle comprend en outre jusqu'à 2 % en poids d'au moins un stabilisateur de viscosité.

5. Composition selon l'une des revendications 1 à 4, caractérisée en ce qu'elle comprend en outre jusqu'à 3 % en poids d'au moins un régularisateur d'expansion.

6. Composition selon l'une des revendications 1 à 5, caractérisée en ce que le polymère de chlorure de vinyle en poudre est choisi parmi les homopolymères de chlorure de vinyle et les copolymères de chlorure de vinyle avec au moins un comonomère choisi parmi l'acétate de vinyle et le chlorure de vinylidène.

7. Composition selon l'une des revendications 1 à 6, caractérisée en ce qu'elle comprend en outre au moins un pigment minéral ou organique.

8. Composition selon l'une des revendications 1 à 7, caractérisé en ce que la granulométrie moyenne de la poudre de polymère de chlorure de vinyle est comprise entre 8 et 30 µm.

9. Procédé de prélaquage des métaux comprenant successivement les étapes de traitement de surface du métal, d'enduction et réticulation de cuisson primaire, caractérisé en ce qu'il comprend en outre une étape d'enduction et de cuisson d'une composition selon la revendication 1.

10. Procédé selon la revendication 9, caractérisé en ce que la cuisson de la composition de prélaquage est effectuée à une température comprise entre 175 et 215°C.

11. Procédé selon l'une des revendications 9 et 10, caractérisée en ce que l'enduction de la composition de prélaquage est effectuée à une vitesse comprise entre 5 et 60 mètres/min.

12. Procédé selon l'une des revendications 9 à 11, caractérisé en ce que la cuisson de la composition de prélaquage est effectuée pendant une durée comprise entre 10 et 120 secondes.

13. Procédé selon l'une des revendications 9 à 12, caractérisé en ce que l'enduction de la composition de prélaquage est effectuée à raison d'au moins 400 grammes de ladite composition par mètre carré de métal.

14. Pièce en tôle métallique revêtue d'au moins une couche de primaire d'adhèrence, ladite couche de primaire d'adhérence étant elle-même revêtue d'au moins une couche de prélaquage, caractérisée en ce que ladite couche de prélaquage est une couche expansée obtenue à partir d'une composition selon la revendication 1.

Office européen
des brevets

**RAPPORT DE RECHERCHE EUROPEENNE**

**0165089**
Numero de la demande

EP 85 40 0769

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| X | FR-A-1 168 781 (F. KAUER)<br><br>* Résumé; page 2, exemple 2, colonne de droite, paragraphe 2 *<br><br>----- | 1-3,7, 9 | C 09 D 5/00<br>C 08 J 9/00<br>C 08 L 27/06 |

DOMAINES TECHNIQUES RECHERCHES (Int. Cl.4)

C 09 D
C 08 J

Le présent rapport de recherche a été établi pour toutes les revendications

| Lieu de la recherche | Date d'achèvement de la recherche | Examinateur |
|---|---|---|
| LA HAYE | 11-08-1985 | DE ROECK R.G. |